(19) Europäisches Patentamt / European Patent Office / Office européen des brevets

(11) **EP 4 696 668 A1**

(12) **EUROPEAN PATENT APPLICATION**
published in accordance with Art. 153(4) EPC

(43) Date of publication:
**18.02.2026 Bulletin 2026/08**

(21) Application number: **24788855.5**

(22) Date of filing: **15.04.2024**

(51) International Patent Classification (IPC):
*C04B 28/00* (2006.01)

(52) Cooperative Patent Classification (CPC):
**C04B 28/00**

(86) International application number:
**PCT/JP2024/015013**

(87) International publication number:
**WO 2024/214833 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.04.2023 US 202363496020 P**

(71) Applicant: **The University of Tokyo**
**Bunkyo-ku, Tokyo 113-8654 (JP)**

(72) Inventors:
• **SAKAI, Yuya**
**Tokyo 113-8654 (JP)**
• **QUI, Pengcheng**
**Tokyo 113-8654 (JP)**

(74) Representative: **Symbiosis IP Limited**
**The Innovation Centre**
**217 Portobello**
**Sheffield, South Yorkshire S1 4DP (GB)**

(54) **METHOD FOR PRODUCING SIO2 HARDENED BODY**

(57) An object of the present invention is to provide a novel method for producing an $SiO_2$ hardened body that can serve as a concrete substitute without using cement, which emits a large amount of carbon dioxide during a production process. It has been newly found that a mixture obtained by adding an alcohol compound and a catalyst compound to an $SiO_2$-containing raw material is subjected to heat treatment at a relatively low temperature and then hot pressing and heat sintering are performed, such that a large $SiO_2$ hardened body can be obtained with general-purpose equipment as compared with conventional methods, and an $SiO_2$ hardened body having a high compressive strength can be efficiently obtained.

[Fig. 2]

Φ20 mm x H 27 mm

EP 4 696 668 A1

## Description

Technical Field

The present invention relates to a method for efficiently obtaining a hardened body from an $SiO_2$-containing material such as sand or gravel.

Background Art

Concrete is the most widely used construction material in the world. Cement has been used as a main material of concrete; however, there has been a problem in that a large amount of carbon dioxide is emitted during its production. In addition, since high-quality sand and gravel, which are the main raw materials of cement, are becoming increasingly scarce worldwide, the development of alternative materials for concrete that do not use cement has become an urgent issue (for example, see Patent Literature 1).

Conditions required for alternative materials include that the raw materials can be obtained almost infinitely and can be repeatedly used. In this regard, the most abundant materials on Earth are sand and gravel mainly composed of silicon, and it is considered that, when construction materials can be directly produced from these materials, the construction materials could serve as promising alternative materials to concrete. However, concrete substitutes that are practical for actual use have not yet been sufficiently realized. On the other hand, the inventors of the present application have developed a method for producing a hardened body, in which sand or gravel is placed in an alcohol and an alkali metal, and a high-temperature treatment is performed in a sealed vessel to cause chemical bonding between the sand and gravel (see Patent Literature 2). However, in the high-temperature treatment in the sealed vessel, the pressure becomes high, and therefore, there has been a drawback in that expensive equipment having pressure resistance is required.

Citation List

Patent Literature

  Patent Literature 1: JP 2019-6610 A
  Patent Literature 2: JP 2021-127264 A
  Patent Literature 3: JP 2019-119736 A

Summary of Invention

Technical Problem

Therefore, an object of the present invention is to provide a novel method for producing an $SiO_2$ hardened body that can serve as a concrete substitute without using cement, which emits a large amount of carbon dioxide during a production process.

Solution to Problem

As a result of intensive studies to solve the above problems, the present inventors have newly found that a mixture obtained by adding an alcohol compound and a catalyst compound to an $SiO_2$-containing raw material (hereinafter, sometimes referred to as "$SiO_2$ raw material") such as sand or gravel is subjected to heat treatment at a relatively low temperature and then to hot pressing (and optionally) and heat sintering, such that a large $SiO_2$ hardened body can be obtained with general-purpose equipment as compared with conventional methods, and an $SiO_2$ hardened body having a high compressive strength can be efficiently obtained, and have thereby accomplished the present invention.

That is, in one aspect, the present invention relates to a method for producing an $SiO_2$ hardened body, and more specifically, provides:

  <1> A method for producing an $SiO_2$ hardened body, the method including: a) a step of preparing a mixture obtained by mixing an $SiO_2$-containing raw material, an alcohol compound, and a catalyst compound, the catalyst compound being an alkali metal salt or an alkaline earth metal salt; b) a step of performing heat treatment on the mixture obtained in the step a); c) a step of performing hot pressing on the treated product obtained in the step b); and d) a step of optionally performing heat sintering on the treated product obtained in the step c), in which the $SiO_2$ hardened body is an aggregate of the $SiO_2$-containing raw material having a structure in which at least a part of $SiO_2$ components present on a surface of the $SiO_2$-containing raw material are bonded to each other;

<2> The method according to <1>, in which at least a part of the treated product obtained in the step c) is in a gelled state;

<3> The method according to <1>, in which the hot pressing in the step c) is performed under conditions of a temperature in a range of 20 to 200°C and a pressure in a range of 1 to 100 MPa;

<4> The method according to <1>, in which the hot pressing in the step c) is performed for 10 seconds to 1 hour;

<5> The method according to <1>, in which at least a part of the treated product obtained in the step b) is in a liquefied state or a gelled state;

<6> The method according to <1>, in which a heating temperature in the step b) is in a range of 90 to 200°C;

<7> The method according to <1>, in which a heating time in the step b) is 1 hour to 10 days;

<8> The method according to <1>, further including, before the step d), a step of drying the treated product obtained in the step c) at 200°C or lower;

<9> The method according to <1>, in which the heat sintering in the step d) is performed at a temperature in a range of 300 to 800°C;

<10> The method according to <1>, in which the heat sintering in the step d) is performed for 1 to 24 hours;

<11> The method according to <1>, in which the $SiO_2$-containing raw material includes siliceous stone, silica sand, diatomaceous earth, quartz, or silica;

<12> The method according to <1>, in which the $SiO_2$-containing raw material is an inorganic material selected from sand, gravel, coal ash, biomass combustion ash, and a combination thereof;

<13> The method according to <1>, in which the $SiO_2$-containing raw material contains 10% by weight or more of $SiO_2$;

<14> The method according to <1>, in which the $SiO_2$-containing raw material has a particulate form having a particle diameter in a range of 1 nm to 10 cm;

<15> The method according to <1>, in which the alcohol compound is ethanol;

<16> The method according to <1>, in which the alcohol compound is a solution having an alcohol concentration of 50 to 95% by volume;

<17> The method according to <1>, in which the catalyst compound is at least one selected from the group consisting of hydroxides, halides, sulfates, carbonates, and hydrogen carbonates of alkali metals or alkaline earth metals;

<18> The method according to <1>, in which the catalyst compound is potassium hydroxide (KOH), sodium hydroxide (NaOH), calcium hydroxide ($Ca(OH)_2$), or a combination thereof;

<19> The method according to <18>, in which the catalyst compound is a combination of potassium hydroxide and calcium hydroxide;

<20> The method according to <19>, in which a ratio of potassium hydroxide to calcium hydroxide is in a range of 1:1 to 2:1 by weight; and

<21> The method according to <1>, in which the amount of the catalyst compound in the mixture is 10 to 60% by weight.

In addition, in another aspect, the present invention also relates to an $SiO_2$ hardened body and a gel composition containing the same, and more specifically, provides:

<22> An $SiO_2$ hardened body in which $SiO_2$-containing materials are bonded to each other through chemical bonding, in which the $SiO_2$ hardened body maintains 50% or more of a compressive strength after immersion in water as compared with that before immersion;

<23> The $SiO_2$ hardened body according to <22>, in which the compressive strength after immersion in water is 20 MPa or more; and

<24> A gel composition containing an $SiO_2$ hardened body component in which $SiO_2$-containing materials are bonded to each other through chemical bonding, and a tetraalkoxysilane component ($Si(OR)_4$).

Advantageous Effects of Invention

According to the present invention, a hardened body in which $SiO_2$ raw materials are directly bonded to each other can be obtained without using cement that emits a large amount of carbon dioxide during a production process, and a novel concrete substitute or the like can be provided at low cost and with high efficiency. In addition, according to a production method of the present invention, a large $SiO_2$ hardened body can be obtained with general-purpose equipment as compared with conventional methods, and an $SiO_2$ hardened body having a high compressive strength can be efficiently obtained.

In addition, since the $SiO_2$ hardened body obtained by the production method of the present invention is hardened without using a conventional cement paste, the $SiO_2$ hardened body has, for example, the following advantages:

· the volume change due to drying and wetting is small;
· creep deformation is small;
· deterioration caused by calcium elution due to water or acid can be suppressed;
· deterioration caused by an alkali-aggregate reaction (an expansion phenomenon of aggregate under an alkaline environment) can be suppressed;
· the time required for strength development can be shortened (whereas it takes about one month for ordinary concrete, it can be achieved in about 24 hours according to the present invention);
· since the alkali metal compound used in the production process serves as a catalyst, it can be reused; and
· the alcohol compound used in the production process can also be reused because it returns to its original state after high-temperature treatment.

Brief Description of Drawings

Fig. 1 is a graph showing a particle size distribution of raw material silica sand used in Examples.
Fig. 2 is an image of an $SiO_2$ hardened body produced in Examples.
Fig. 3 is a graph showing the compressive strength and porosity of $SiO_2$ hardened bodies obtained when the concentration of ethanol added to the $SiO_2$ raw material was varied.
Fig. 4 is a graph showing the compressive strength and porosity of $SiO_2$ hardened bodies obtained when the concentration of KOH added to the $SiO_2$ raw material was varied.
Fig. 5 is a graph showing the compressive strength and porosity of $SiO_2$ hardened bodies obtained when various heating times were used.

Description of Embodiments

Hereinafter, embodiments of the present invention will be described. The scope of the present invention is not limited to these descriptions, and examples other than those shown below can be appropriately modified and implemented without impairing the gist of the present invention.

1. Production Method for Hardened Body of Present Invention

A production method of the present invention is a method for producing an $SiO_2$ hardened body, the method including the following steps a) to d):

a) a step of preparing a mixture obtained by mixing an $SiO_2$-containing raw material, an alcohol compound, and a catalyst compound;
b) a step of performing heat treatment on the mixture obtained in the step a);
c) a step of performing hot pressing on the treated product obtained in the step b); and
d) a step of optionally performing heat sintering on the treated product obtained in the step c).

The $SiO_2$ hardened body obtained herein is an aggregate (hardened body) in which at least a part of $SiO_2$ components present on a surface or the like of the $SiO_2$-containing raw material ($SiO_2$ raw material) are bonded to each other through a chemical bond (Si-O-Si), such that a plurality of $SiO_2$ raw materials are directly bonded to each other. In addition, it is known that $SiO_2$ forms a silica porous body through a sol-gel reaction, and the present invention also encompasses an aspect in which a hardened body is formed by bonding $SiO_2$ raw materials to each other as a result of solation occurring only on the surfaces of the $SiO_2$ raw materials. Note that, in the bonding between $SiO_2$ raw materials, not only the above-described chemical bonding but also mechanical bonding (adhesion) and physical bonding (such as van der Waals forces) may be involved. However, in the $SiO_2$ hardened body of the present invention, the bonding is characterized in that not only such mechanical bonding or physical bonding but also chemical bonding is formed between at least a part of the $SiO_2$ components.

Although the present invention is not necessarily limited by theory, it is presumed that the mechanism by which the $SiO_2$ hardened body is obtained in the production method of the present invention is as follows. Fukaya et al. have reported that tetraalkoxysilane, which is an organosilicon compound, can be obtained by decomposing and dehydrating sand ($SiO_2$ raw material) with an alcohol (Chemistry Letters 2016 45:7, 828-830). This reaction is represented by the following Reaction Formula (1).
[Math. 1]

$$SiO_2 + 4ROH \rightleftharpoons Si(OR)_4 + 2H_2O \quad \cdots 式(1)$$

Formula (1)

In the paper by Fukaya et al., efficient production of tetraalkoxysilane ($Si(OR)_4$) was achieved by removing water ($H_2O$) generated as a reaction product, thereby shifting the equilibrium of the reaction to the right side. Here, since this reaction represented by Formula (1) is a reversible equilibrium reaction, it can be interpreted that cleavage and reformation of chemical bonds of $SiO_2$ repeatedly occur in the reaction.

Conventionally, attempts have been made to apply this reaction to efficiently produce tetraalkoxysilane ($Si(OR)_4$) (for example, JP 2019-119736 A of Patent Literature 3). That is, $H_2O$ on the right-hand side of Formula (1) can be removed by using a molecular sieve or a dehydrating agent, and the equilibrium reaction is promoted toward the right-hand side, such that tetraalkoxysilane can be obtained. In this case, the product obtained is merely tetraalkoxysilane, and $SiO_2$ on the left-hand side is not generated, and a hardened body thereof is not obtained.

In addition, Patent Literature 2 (JP 2021-127264 A) discloses that attention is focused on such an equilibrium reaction, Reaction Formula (1) is applied to $SiO_2$ raw materials, and after tetraalkoxysilane is once generated, $SiO_2$ on the left-hand side is generated again, such that $SiO_2$ components present on the surfaces of the $SiO_2$ raw materials are bonded to each other, and an aggregate (hardened body) in which the $SiO_2$ raw materials are directly bonded to each other is obtained. However, in the method disclosed in Patent Literature 2, it is essential to perform a dehydration operation by adding dimethoxypropane (DMP) or the like during the step of forming the hardened body, and in addition, the degree of hardening and the strength of the obtained hardened body are not sufficient.

On the other hand, while the present invention is similar in that it utilizes the fact that $SiO_2$ components in $SiO_2$ raw materials repeatedly undergo cleavage and reformation of chemical bonds of $SiO_2$ according to Reaction Formula (1), it is characterized in that, in the production process, without adding a dehydrating agent as in Patent Literature 2, a step of performing hot pressing on the mixture and then performing heat sintering on the mixture is performed, such that a large $SiO_2$ hardened body can be obtained with general-purpose equipment as compared with the conventional methods, and an $SiO_2$ hardened body having a high compressive strength can be efficiently obtained.

In the present invention, the "$SiO_2$-containing raw material or $SiO_2$ raw material" is not particularly limited as long as it is a substance containing $SiO_2$ to a certain extent, and may be a natural mineral, an artificial material, or a biologically derived material. Examples of the natural mineral include siliceous stone, silica sand, diatomaceous earth, quartz, and opal. Examples of the artificial material include general glass, silica gel, fumed silica, silica alumina, zeolite, glass beads, glass fibers, and glass wool. Examples of the biologically derived material include diatom shells, radiolarian skeletons, plant combustion ash, and phytoliths (so-called plant opals) contained in plants.

Preferably, the $SiO_2$ raw material may include siliceous stone, silica sand, diatomaceous earth, quartz, silica, or a combination of one or more thereof, and may also include, for example, granite or rhyolite. From the viewpoint of availability and the like, the $SiO_2$ raw material is typically an inorganic material selected from sand, gravel, coal ash, biomass combustion ash, and a combination thereof. Such gravel or sand may be used as an aggregate in the production of concrete or mortar. The sand may also be regolith, which is sand or gravel on an extraterrestrial body (for example, the Moon), or a simulated sand that imitates such regolith.

The $SiO_2$ raw material used in the present invention may contain $SiO_2$ in an amount of 10% by weight or more, preferably 45% by weight or more, and more preferably 60% by weight or more.

In addition, from the viewpoint of efficiency during the hardening reaction and the like, the $SiO_2$ raw material used in the present invention preferably has a particulate form or a substantially particulate form. The particle diameter (average particle diameter) in this case can be in a range of 1 nm to 10 cm, typically 1 $\mu$m to 10 cm, preferably 10 $\mu$m to 5 cm, and more preferably 100 $\mu$m to 3 cm. However, as described above, the $SiO_2$ raw material is not required to have a completely particulate form and may have a non-uniform shape like so-called sand or gravel; therefore, the term "particle diameter" as used herein should be understood to indicate an approximate size. According to the production method of the present invention, it is possible to obtain an $SiO_2$ hardened body in which particulate bodies having a particulate form or a substantially particulate form are bonded to each other and integrated with each other.

<Step a)>

As described above, the step a) in the production method of the present invention is a step of preparing a mixture obtained by mixing at least the following three components:

1) an SiO$_2$ raw material;
2) an alcohol compound; and
3) a catalyst compound. As a result, a chemical equilibrium state as shown in Reaction Formula (1) can be obtained.

The alcohol compound used in the step a) can be an alcohol having a linear or branched alkyl, and the alkyl moiety may be substituted with any substituent. The alcohol compound is preferably an alcohol having 1 to 10 carbon atoms, and more preferably an alcohol having 1 to 5 carbon atoms. Typically, the alcohol compound is methanol or ethanol, and preferably ethanol. The alcohol compound can serve as a raw material for obtaining tetraalkoxysilane on the right-hand side in Reaction Formula (1), but in the overall equilibrium reaction, the alcohol compound can revert to the alcohol on the left-hand side.

Here, the alcohol compound is typically added into the mixture in the form of an alcohol solution containing water. A concentration of the alcohol solution is preferably 20% by volume (v/v%) or more, more preferably 50% by volume or more, and still more preferably 80% by volume or more. In a preferred aspect, a volume of the alcohol solution is in a range of 50 to 95% by volume, and particularly preferably in a range of 80 to 99% by volume.

The amount of the alcohol solution containing the alcohol compound in the step a) can be appropriately set, but is preferably 1 to 50 parts by weight, and more preferably 1 to 15 parts by weight, with respect to 100 parts by weight of the raw material mixture.

The catalyst compound used in the step a) is an alkali metal salt or an alkaline earth metal salt, and is a component that promotes cleavage of silicon-oxygen bonds in SiO$_2$ and functions as a catalyst for the formation of alkoxysilane on the right-hand side of Reaction Formula (1).

Examples of the alkali metal and alkaline earth metal in such an alkali metal salt and an alkaline earth metal salt include lithium (Li), sodium (Na), magnesium (Mg), potassium (K), calcium (Ca), and cesium (Cs). In addition, examples of the counter anion include hydroxide, halide, oxide, carbonate, hydrogen carbonate, alkoxide, silicate, aluminate, phosphate, organic acid salt, sulfate, and nitrate. Among them, hydroxide, halide, carbonate, and hydrogen carbonate are preferred, and alkali metal hydroxides, alkali metal halides, alkali metal carbonates, and alkali metal hydrogen carbonates are more preferred.

Specific examples of the catalyst compound include lithium hydroxide, sodium hydroxide, potassium hydroxide, calcium hydroxide, cesium hydroxide, lithium carbonate, sodium carbonate, potassium carbonate, cesium carbonate, sodium fluoride, potassium fluoride, and cesium fluoride. Note that the catalyst compounds may be used not only singly but also in combination of two or more kinds. The alkali metal compound can be preferably at least one selected from the group consisting of hydroxides, halides, sulfates, carbonates, and hydrogen carbonates of alkali metals or alkaline earth metals.

In a preferred aspect, the catalyst compound is potassium hydroxide (KOH), sodium hydroxide (NaOH), calcium hydroxide (Ca(OH)$_2$), or a combination thereof. Particularly preferably, the catalyst compound is a combination of potassium hydroxide and calcium hydroxide, and a ratio of potassium hydroxide to calcium hydroxide is in a range of 1:1 to 2:1 by weight. It is preferable to use a mixture containing such calcium hydroxide, since the mixture can suppress strain in the finally obtained SiO$_2$ hardened body and provide a body having higher strength. Here, it is also possible to use a mixture of sodium hydroxide and calcium hydroxide instead of potassium hydroxide.

The amount of the catalyst compound is not particularly limited, but is preferably in a range of 0.01 parts by weight to 50 parts by weight with respect to the SiO$_2$ raw material. The catalyst compound may be added in the form of a solution in which the catalyst compound is dissolved, but is preferably a solution containing 10 to 30% by weight of the catalyst compound.

The amount of the SiO$_2$ raw material in the step a) may be appropriately set, but is preferably 1 to 50 parts by weight, and more preferably 1 to 30 parts by weight, with respect to 100 parts by weight of the alcohol compound.

In a preferred aspect, the mixture obtained in the step a) does not contain an aprotic organic solvent as a raw material. Examples of such an aprotic organic solvent include acetals such as dimethoxypropane and ethers.

In addition, the amount of the alkali metal compound or the alkaline earth metal compound in the step a) is preferably 1 to 20 parts by weight, and more preferably 13 to 20 parts by weight, with respect to 100 parts by weight of the SiO$_2$-containing raw material.

<Step b)>

Next, the step b) in the production method of the present invention is a step of performing heat treatment on the mixture obtained in the step a) under relatively low-temperature conditions to advance the reaction toward the right-hand side of Reaction Formula (1), thereby converting a part or all of SiO$_2$ in the SiO$_2$ raw material into a tetraalkoxysilane component (Si(OR)$_4$). As a result, in the treated product after the heat treatment in the step b), at least a part of the SiO$_2$ raw material is in a liquefied state or a gelled state (alkali silica gel).

The heat treatment in the step b) is preferably performed at a temperature in a range of 40 to 300°C, and more preferably in a range of 90 to 200°C. In addition, a heating time can be appropriately set depending on the amount of the reactant and the like, but is typically in a range of 1 hour to 10 days, and preferably in a range of 5 to 8 days. The heat treatment is typically preferably performed at a temperature of about 110°C for 7 days.

The step b) can be performed under any pressure conditions, but the pressure is usually 0.1 MPa or more, preferably 0.5 MPa or more, and more preferably 1.0 MPa or more, and is usually 60 MPa or less, preferably 30 MPa or less, and more preferably 20 MPa or less. Therefore, the step b) can be performed in a pressure-resistant and heat-resistant reactor such as an autoclave.

<Step c)>

The step c) in the production method of the present invention is a step of performing pressing (that is, hot pressing) on the partially liquefied treated product obtained in the step b) under heating conditions. As a result, the $SiO_2$ component on the left-hand side of Reaction Formula (1) is regenerated, such that a hardened body in which the $SiO_2$ raw materials are directly bonded to each other can be obtained, and the strength of the $SiO_2$ hardened body can be increased. In the hot pressing, it is preferable to perform physical pressing, that is, compression or the like of the mixture by applying mechanical stress. Therefore, the reactor may be provided with means for pressing inside the reactor. As an example of such pressing means, a metal flat plate provided with a punch hole that can be driven in a vertical direction may be installed in the reactor, thereby pressing solid components in the mixture. In this case, the size of the metal flat plate may be slightly smaller than the inner diameter of the reactor, such that a liquid component in the mixture escapes upward through a gap between the reactor wall and the plate, and pressure can be applied only to the solid component.

The hot pressing in the step c) is preferably performed under higher temperature and higher pressure conditions; for example, the temperature can be in a range of 20 to 200°C, and preferably 30 to 150°C, and the pressure can be in a range of 0.1 to 100 MPa, and preferably 1.5 to 20 MPa.

The time for performing hot pressing can be appropriately set depending on the amount of the reactants or the like, and typically, the time can be in a range of 10 seconds to 1 hour, and preferably 1 to 30 minutes.

Preferably, at least a part of the treated product obtained in the step c) is in a gelled state, and also contains a component that is not completely an $SiO_2$ hardened body.

<Step d)>

In the production method of the present invention, it is preferable to perform, optionally as a step d), a step of performing heat sintering on the treated product obtained in the step c). By performing sintering at a high temperature, hydrogen bonds on the surface of the $SiO_2$-containing material can be converted into covalent bonds through a dehydration (condensation) reaction, thereby increasing the strength of the $SiO_2$-containing material.

A heating temperature in the heat sintering is preferably in a range of 300 to 800°C, and more preferably in a range of 500 to 800°C. The time for performing heat sintering can be appropriately set depending on the amount of the reactants or the like, and typically, the time can be in a range of 1 to 24 hours, and preferably 2 to 8 hours.

In addition, the heat sintering can more efficiently promote the dehydration reaction when performed under a reduced pressure environment. Herein, the term "reduced pressure" includes a vacuum state.

In a preferred aspect, the production method further includes, before the heat sintering in the step d), a step of drying the treated product obtained in the step c) at 200°C or lower.

Note that, surprisingly, when a combination of sodium hydroxide and calcium hydroxide was used as the catalyst compound, an $SiO_2$ hardened body having desired properties was obtained even when the heat sintering in the step d) was performed for a short time or was not performed at all.

2. Physical Properties And The Like of $SiO_2$ Hardened Body Obtained By Production Method of Present Invention

That is, the $SiO_2$ hardened body obtained by the production method of the present invention has excellent physical properties such as compressive strength and porosity, which make it suitable as a concrete alternative material.

More specifically, the $SiO_2$ hardened body obtained by the production method of the present invention preferably has a compressive strength of 16 MPa or more, and more preferably 20 MPa or more. In addition, the $SiO_2$ hardened body has a compressive strength in a range of 16 to 50 MPa, and more preferably in a range of 20 to 50 MPa.

The compressive strength of the hardened body can be measured by a known method in the art, and for example, after drying the obtained $SiO_2$ hardened body, the surface is cut with a low-speed cutter or the like, and a test is performed using a universal testing machine. The compressive strength fc (MPa) can be calculated by applying the load measured with a load cell to the following equation. In the equation, P is the maximum load (N), and d is the diameter (mm).

[Math. 2]

$$fc = \frac{P}{\left(\dfrac{d}{2}\right)^2 \pi}$$

In particular, the $SiO_2$ hardened body obtained by the production method of the present invention maintains a relatively high compressive strength even after being immersed in water, and has a novel feature in that it is also suitable for use in environments where water is present. Specifically, the $SiO_2$ hardened body obtained by the production method of the present invention can maintain, after immersion in water, a compressive strength of preferably 50% or more, and more preferably 70% or more, as compared with that before immersion.

Accordingly, in another aspect, the present invention relates to an $SiO_2$ hardened body in which $SiO_2$ is bonded to each other through chemical bonding, in which the $SiO_2$ hardened body maintains 50% or more of a compressive strength after immersion in water as compared with that before immersion. The compressive strength after immersion in water can be preferably 20 MPa or more, and more preferably 25 MPa or more.

In addition, the $SiO_2$ hardened body obtained by the production method of the present invention preferably has a porosity in a range of 40% or less, more preferably 20% or less, and still more preferably 10% or less. As a result, the $SiO_2$ hardened body can have higher strength than conventional $SiO_2$ hardened bodies and can increase its strength as a concrete alternative material. Note that, when the $SiO_2$ hardened body is used in applications in which high heat insulation or sound insulation is desired, the $SiO_2$ hardened body can have a porosity of 60% or more.

The porosity of the $SiO_2$ hardened body corresponds to the "open porosity" defined in JIS R1634:1998. Such porosity can be measured by a known method, and can be measured by, for example, the Archimedes method. That is, after the weight of the obtained $SiO_2$ hardened body is measured in a state including an alcohol compound or the like, the $SiO_2$-containing material is dried to an absolutely dry state, and its weight is measured, and the porosity (%) can be calculated from the measured weights using the following equation.

[Math. 3]

$$\text{Porosity}(\%) = \frac{W_2 - W_1}{W_2 - W_3} \times 100$$

$W_1 \cdots$ Absolutely dry weight
$W_2 \cdots$ Saturated weight
$W_3 \cdots$ Weight in water

Furthermore, as described above, since the $SiO_2$ hardened body obtained by the production method of the present invention can be in a gel form in part, in another aspect, the present invention can also be said to relate to a gel composition containing an $SiO_2$ hardened body component in which $SiO_2$ is bonded to each other through chemical bonding, and a tetraalkoxysilane component ($Si(OR)_4$).

The $SiO_2$ hardened body of the present invention and a composition containing the same can be used for various applications, such as construction materials including building and structural materials, and as raw materials for industrial products and crafts (for example, containers, molds, tableware, and ornaments). In particular, when used as a construction material, it is useful as a concrete alternative material that can be produced without using cement.

Examples

Hereinafter, the present invention will be described in more detail with reference to Examples, but the present invention is not limited to these Examples.

1. Production of $SiO_2$ Hardened Body

[Materials]

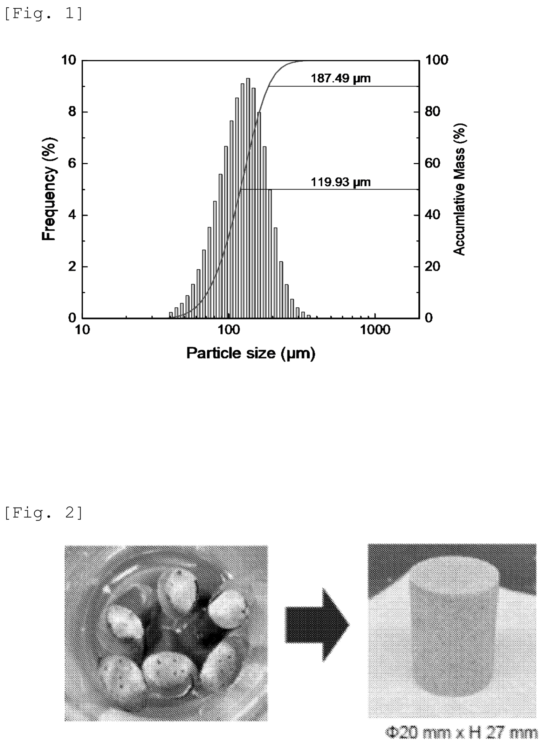

Commercially available silica sand (ST Kraft) was used as an $SiO_2$ raw material. The chemical composition of the silica sand measured by X-ray fluorescence analysis was as shown in Table 1. In addition, according to the particle size distribution of the silica sand shown in Fig. 1, 98.5% or more of the particles had a size of less than 250 $\mu$m.

[Table 1]

Chemical composition of raw material silica sand [% by weight]

| $SiO_2$ | $Al_2O_3$ | $K_2O$ | $TiO_2$ | $Fe_2O_3$ | $Na_2O$ | CaO | MgO | $ZrO_2$ | LOI |
|------|------|------|------|------|------|------|------|------|------|
| 84.70 | 8.47 | 4.71 | 0.70 | 0.68 | 0.26 | 0.15 | 0.12 | 0.08 | 0.13 |

Silica sand was mixed with 0% by weight to 40% by weight of KOH (the weight percentage of KOH with respect to the weight of the silica sand), and the mixture was placed in a cylindrical vessel formed of stainless foil and then stored in an autoclave. Ethanol (15 ml) in an amount of 0 to 99.5% by volume was added thereto. Under a saturated ethanol vapor pressure, the autoclave was heated at 110°C for 7 days. The obtained mixed powder was hot-pressed at 105°C and 2.5 MPa for 1 minute, and then further dried at 105°C for 7 days. Finally, sintering was performed at 500°C for 3 hours to obtain an $SiO_2$ hardened body. An image of the obtained hardened body is shown in Fig. 2 (the left side shows the raw material, and the right side shows the hardened body).

Note that it was observed that, before the hot-pressing treatment, the sample in the autoclave was a moist powder containing a liquid and that a hardened body was not formed. This indicates that a desired $SiO_2$ hardened body cannot be obtained only by heat treatment at a relatively low temperature of about 110°C.

The compressive strength and porosity of the obtained $SiO_2$ hardened body were measured. The compressive strength was measured using a universal testing machine (UH-1000kNC, Shimadzu Corporation) at a loading rate of 0.5 kN/min. The porosity was measured by preparing a test piece of $\Phi$20 mm $\times$ 30 mm and using Archimedes' principle in accordance with the GB/T 8489-2006 standard.

Various conditions in 1. Production Process were changed, and comparative examinations were conducted.

2-1. Examination of Alcohol Compound Concentration

The concentration of ethanol added to the $SiO_2$ raw material was varied in a range of 60 to 99.5% by volume (v/v%), $SiO_2$ hardened bodies were produced in the same manner as in the above section 1, and the compressive strength and porosity of the resulting $SiO_2$ hardened bodies were measured. The reaction conditions are as follows. KOH content: 20% by weight, autoclave heating conditions: 110°C for 7 days, hot pressing conditions: 105°C and 2.5 MPa for 1 minute, drying time: 7 days, sintering conditions: 500°C for 3 hours.

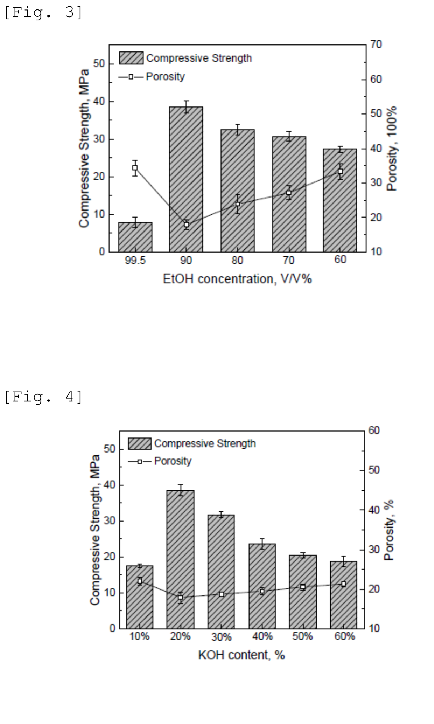

The compressive strength and porosity of the obtained $SiO_2$ hardened bodies are shown in Fig. 3. As a result, the compressive strength increased as the ethanol concentration increased, reaching a maximum value of 38.55 MPa at an ethanol concentration of 90%. On the other hand, when the ethanol concentration was further increased to 99.5%, the compressive strength decreased to 7.88 MPa. In addition, this tendency is considered to result from the fact that, when the ethanol concentration is too high, the formation of new $SiO_2$ on the left-hand side of Formula (1) is inhibited, whereas when the ethanol concentration is too low, the dissolution of the silica sand into ethanol is reduced.

In addition, the porosity decreased with an increase in the ethanol concentration, reaching a minimum value (17.93%) at an ethanol concentration of 90%. On the other hand, when the ethanol concentration was further increased to 99.5%, the porosity was 30% or more. This is considered to be because a decrease in porosity resulted in a denser structure of the $SiO_2$ hardened body, thereby providing a higher compressive strength.

2-2. Examination of Catalyst Compound Concentration

Next, the concentration of KOH added to the $SiO_2$ raw material was varied in a range of 10 to 60% by weight, $SiO_2$ hardened bodies were produced in the same manner as in the above section 1, and then, the compressive strength and porosity of the resulting $SiO_2$ hardened bodies were measured. The reaction conditions are as follows. Ethanol concentration: 90 v/v% (45 ml), autoclave heating conditions: 110°C for 7 days, hot pressing conditions: 105°C and 2.5 MPa for 1 minute, drying time: 7 days, sintering conditions: 500°C for 3 hours. Note that, when KOH was not added at all, an $SiO_2$ hardened body was not obtained.

The compressive strength and porosity of the hardened bodies obtained from $SiO_2$ materials are shown in Fig. 4. As a result, the maximum compressive strength (38.55 MPa) was obtained at a KOH concentration of 20% by weight. On the other hand, when the KOH concentration was further increased, the compressive strength gradually decreased. The samples were analyzed by FT-IR, and it was found that the peak attributed to the stretching vibration of the Si-O-Si bond decreased with an increase in the KOH concentration. This suggests that, when the KOH concentration is equal to or greater than a certain level, the strength of the $SiO_2$ hardened body decreases due to side reactions with ethanol or the like.

2-3. Examination of Reaction Time (Heating Time)

Furthermore, the heating time (in an autoclave) after mixing the raw materials was varied, $SiO_2$ hardened bodies were produced in the same manner as described in the above section 1, and the compressive strength and porosity of the obtained $SiO_2$ hardened bodies were measured. The reaction conditions are as follows. Ethanol concentration: 90 v/v%, KOH content: 20% by weight, autoclave heating temperature: 110°C, hot pressing conditions: 105°C and 2.5 MPa for 1 minute, drying time: 7 days, sintering conditions: 500°C for 3 hours.

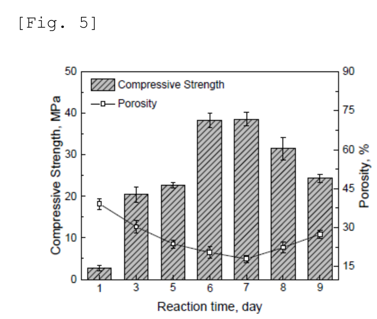

The compressive strength and porosity of the hardened bodies obtained from $SiO_2$ materials are shown in Fig. 5. The compressive strength of the sample subjected to the heat treatment in the autoclave for one day was 2.82 MPa, but when the heat treatment was performed for 3 days, the compressive strength markedly increased to 20.43 MPa. Furthermore, when the heat treatment was performed for 6 days, the compressive strength increased to 38.31 MPa, and reached a maximum value of 38.55 MPa after 7 days. On the other hand, the porosity showed an opposite tendency to the compressive strength, reaching a minimum value of 17.93% when the heat treatment was performed for 7 days, and then tended to increase thereafter.

2-4. Examination of Hot Pressing and Drying Conditions

The temperature and pressure during the hot pressing treatment, and the subsequent drying time, were varied, $SiO_2$ hardened bodies were produced in the same manner as described in the above 1, and the compressive strength and porosity of the obtained $SiO_2$ hardened bodies were measured. The reaction conditions are as follows. Ethanol concentration: 90 v/v% (45 ml), KOH content: 20% by weight, autoclave conditions: 110°C for 6 days, hot pressing conditions: 20 to 105°C and 2.5 to 10 MPa for 1 minute, drying time: 1 to 7 days, sintering conditions: 500°C for 3 hours.

As a result, as shown in Tables 2 to 4, it was found that both the temperature and pressure during the autoclave heating increased the compressive strength as the conditions became higher. In addition, the drying time after the heat treatment was found to be optimal at 5 days.

[Table 2]

| Hot-press temperature (°C) | Compressive Strength (MPa) | Porosity (%) |
|---|---|---|
| 20 | 25.00 | 22.60 |
| 50 | 27.46 | 20.83 |
| 80 | 31.87 | 20.80 |
| 105 | 38.31 | 20.38 |

[Table 3]

| Hot-press pressure (MPa) | Compressive Strength (MPa) | Porosity (%) |
|---|---|---|
| 2.5 | 38.31 | 20.38 |
| 5 | 38.93 | 17.42 |
| 10 | 42.37 | 15.98 |

[Table 4]

| Drying time (Days) | Compressive Strength (MPa) | Porosity (%) |
|---|---|---|
| 1 | 33.80 | 24.19 |
| 3 | 38.23 | 21.28 |
| 5 | 39.75 | 16.24 |
| 7 | 38.31 | 20.38 |

2-5. Examination of Heat Sintering Conditions and Strength Changes After Immersion in Water

The effects of the sintering temperature and time after hot pressing on the compressive strength and porosity were examined. In addition, changes in compressive strength after immersing the sintered $SiO_2$ hardened body in water for 24 hours were also examined. The reaction conditions are as follows. Ethanol concentration: 90 v/v% (45 ml), KOH content: 20% by weight, autoclave conditions: 110°C for 6 days, hot pressing conditions: 105°C and 2.5 MPa for 1 minute, drying time: 3 days, sintering conditions: 500 to 800°C for 3 to 6 hours.
The obtained results are shown in Table 5.

[Table 5]

| Sintering conditions | Before immersing into the water | | After immersing into the water | |
|---|---|---|---|---|
| | Compressive Strength (MPa) | Porosity (%) | Compressive Strength (MPa) | Porosity (%) |
| No sintering | 31.17 | / | / | / |
| 500°C 3h | 38.55 | 16.24 | / | / |
| 700°C 3h | 45.32 | 16.66 | 11.22 | 11.43 |
| 800°C 3h | 47.90 | 6.42 | 38.67 | 1.72 |
| 700°C 6h | 59.71 | 14.26 | 26.28 | 9.09 |
| 800°C 6h | 65.35 | 6.37 | 38.87 | 1.65 |

As a result, it was found that the compressive strength increased as the sintering temperature increased and the sintering time increased. In addition, when the sintering was performed at a temperature exceeding 700°C, the sintered $SiO_2$ hardened body maintained its compressive strength even after immersion in water for 24 hours, and in particular, when the sintering was performed at 800°C for 3 hours, the compressive strength after immersion in water was 38.67 MPa, and the compressive strength was maintained at least 80% of that before immersion.

2-6. Examination of Type of Catalyst Compound

The catalyst compound other than KOH used in 1. was examined for addition to the $SiO_2$ raw material. The reaction conditions are as follows. Silica sand: 15 g, ethanol concentration: 90 v/v% (45 ml), catalyst compound content: 20% by weight, autoclave conditions: 110°C for 6 days, hot pressing conditions: 105°C and 2.5 MPa for 1 minute, drying time: 3 days, sintering conditions: 800°C for 3 hours.
First, Table 6 shows a comparison in which NaOH, $Ca(OH)_2$, and KOH were each used alone as the catalyst compound. As a result, it was found that the hardened body obtained using 10% by weight of NaOH exhibited a higher compressive strength than that obtained using KOH.

[Table 6]

|  | Compressive Strength (MPa) | Porosity (%) |
|---|---|---|
| 5% NaOH | 20.69 | 33.07 |
| 10% NaOH | 46.25 | 10.69 |
| 20% NaOH | 19.33 | 18.61 |
| 10% Ca(OH)$_2$ | 1.32 | / |
| 20% Ca(OH)$_2$ | 1.54 | / |
| 10% KOH | 16.63 | / |
| 20% KOH | 31.17 | / |
| 30% KOH | 20.37 | / |

Table 7 shows the results obtained when a predetermined amount of Ca(OH)$_2$ was mixed with KOH, and the ratio was varied so that the total amount of the catalyst compound was 20% by weight. As a result, when the ratio of KOH to Ca(OH)$_2$ was 4:2, a high compressive strength of 41.79 MPa was obtained for the hardened body.

[Table 7]

| Sintering conditions | Compressive Strength before immersing into water (MPa) | Expansion rate (%) | Compressive Strength after immersing into water (MPa) |
|---|---|---|---|
| 20% KOH | 47.90 | 2.07 | 38.67 |
| 20% KOH+Ca(OH)$_2$ (5 : 1) | 17.69 | 19.63 | 10.43 |
| 20% KOH+Ca(OH)$_2$ (4 : 2) | 41.79 | -1.44 | 25.06 |
| 20% KOH+Ca(OH)$_2$ (3 : 3) | 14.70 | -1.43 | 10.43 |

Next, an SiO$_2$ hardened body was produced using a catalyst compound prepared by mixing a predetermined amount of Ca(OH)$_2$ with NaOH, and varying the ratio so that the total amount was 10% by weight. Surprisingly, when a mixture of NaOH and Ca(OH)$_2$ was used, it was found that a hardened body having a high compressive strength could be obtained even without performing any heat sintering after the hot pressing.

The compressive strength and porosity of the obtained hardened bodies are shown in Table 8. As a result, when the ratio of NaOH to Ca(OH)$_2$ was 4:2, a high compressive strength of 49.71 MPa was obtained for the hardened body. In this case, the hardened body maintained a high compressive strength even after immersion in water.

[Table 8]

|  | Compressive Strength before immersing into the water(MPa) | Compressive Strength after immersing into the water(MPa) |
|---|---|---|
| 10% NaOH | 47.90 | / |
| 10% NaOH + Ca(OH)$_2$ (5:1) | 42.71 | 33.81 |
| 10% NaOH + Ca(OH)$_2$ (4:2) | 49.71 | 35.49 |
| 10% NaOH + Ca(OH)$_2$ (3:3) | 28.55 | 21.50 |
| 10% Ca(OH)$_2$ | 1.54 | / |

**Claims**

1. A method for producing an SiO$_2$ hardened body, comprising:

   a) a step of preparing a mixture obtained by mixing an SiO$_2$-containing raw material, an alcohol compound, and a catalyst compound, the catalyst compound being an alkali metal salt or an alkaline earth metal salt;
   b) a step of performing heat treatment on the mixture obtained in the step a);
   c) a step of performing hot pressing on the treated product obtained in the step b); and
   d) a step of optionally performing heat sintering on the treated product obtained in the step c),

   wherein the SiO$_2$ hardened body is an aggregate of the SiO$_2$-containing raw material having a structure in which at least a part of SiO$_2$ components present on a surface of the SiO$_2$-containing raw material are bonded to each other.

2. The method according to claim 1, wherein at least a part of the treated product obtained in the step c) is in a gelled state.

3. The method according to claim 1, wherein the hot pressing in the step c) is performed under conditions of a temperature in a range of 20 to 200°C and a pressure in a range of 1 to 100 MPa.

4. The method according to claim 1, wherein the hot pressing in the step c) is performed for 10 seconds to 1 hour.

5. The method according to claim 1, wherein at least a part of the treated product obtained in the step b) is in a liquefied state or a gelled state.

6. The method according to claim 1, wherein a heating temperature in the step b) is in a range of 90 to 200°C.

7. The method according to claim 1, wherein a heating time in the step b) is 1 hour to 10 days.

8. The method according to claim 1, further comprising, before the step d), a step of drying the treated product obtained in the step c) at 200°C or lower.

9. The method according to claim 1, wherein the heat sintering in the step d) is performed at a temperature in a range of 300 to 800°C.

10. The method according to claim 1, wherein the heat sintering in the step d) is performed for 1 to 24 hours.

11. The method according to claim 1, wherein the SiO$_2$-containing raw material includes siliceous stone, silica sand, diatomaceous earth, quartz, or silica.

12. The method according to claim 1, wherein the SiO$_2$-containing raw material is an inorganic material selected from sand, gravel, coal ash, biomass combustion ash, and a combination thereof.

13. The method according to claim 1, wherein the SiO$_2$-containing raw material contains 10% by weight or more of SiO$_2$.

14. The method according to claim 1, wherein the SiO$_2$-containing raw material has a particulate form having a particle diameter in a range of 1 nm to 10 cm.

15. The method according to claim 1, wherein the alcohol compound is ethanol.

16. The method according to claim 1, wherein the alcohol compound is a solution having an alcohol concentration of 50 to 95% by volume.

17. The method according to claim 1, wherein the catalyst compound is at least one selected from the group consisting of hydroxides, halides, sulfates, carbonates, and hydrogen carbonates of alkali metals or alkaline earth metals.

18. The method according to claim 1, wherein the catalyst compound is potassium hydroxide (KOH), sodium hydroxide (NaOH), calcium hydroxide (Ca(OH)$_2$), or a combination thereof.

19. The method according to claim 18, wherein the catalyst compound is a combination of potassium hydroxide and calcium hydroxide.

20. The method according to claim 19, wherein a ratio of potassium hydroxide to calcium hydroxide is in a range of 1:1 to 2:1 by weight.

21. The method according to claim 1, wherein the amount of the catalyst compound in the mixture is 10 to 60% by weight.

22. An $SiO_2$ hardened body in which $SiO_2$-containing materials are bonded to each other through chemical bonding, wherein the $SiO_2$ hardened body maintains 50% or more of a compressive strength after immersion in water as compared with that before immersion.

23. The $SiO_2$ hardened body according to claim 22, wherein the compressive strength after immersion in water is 20 MPa or more.

24. A gel composition comprising an $SiO_2$ hardened body component in which $SiO_2$-containing materials are bonded to each other through chemical bonding, and a tetraalkoxysilane component $(Si(OR)_4)$.

[Fig. 1]

[Fig. 2]

Φ20 mm x H 27 mm

[Fig. 3]

[Fig. 4]

[Fig. 5]

## INTERNATIONAL SEARCH REPORT

| International application No. |
|---|
| **PCT/JP2024/015013** |

| A. | CLASSIFICATION OF SUBJECT MATTER |
|---|---|

*C04B 28/00*(2006.01)i

FI: C04B28/00

According to International Patent Classification (IPC) or to both national classification and IPC

| B. | FIELDS SEARCHED |
|---|---|

Minimum documentation searched (classification system followed by classification symbols)

C04B7/00-C04B32/02; C04B40/00-C04B40/06; C01B33/12-C01B33/193; C07F7/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JSTChina/JST7580 (JDreamIII)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2021-127264 A (THE UNIVERSITY OF TOKYO) 02 September 2021 (2021-09-02) claims 1-16, paragraphs [0001], [0005]-[0049] | 1-24 |
| A | 酒井雄也, 砂同士の直接接着による硬化体の製造に向けた基礎的検討, 生産研究, 2021, (SAKAI, Yuya. Production of hardened body by direct bonding between sand particles. SEISAN KENKYU.) entire text | 1-24 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 June 2024** | **02 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/015013**

| Patent document cited in search report | Publication date (day/month/year) | Patent family member(s) | Publication date (day/month/year) |
|---|---|---|---|
| JP 2021-127264 A | 02 September 2021 | WO 2021/161970 A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019006610 A
- JP 2021127264 A
- JP 2019119736 A

**Non-patent literature cited in the description**

- *Chemistry Letters*, 2016, vol. 45 (7), 828-830